# EUROPÄISCHE PATENTSCHRIFT

(11) **EP 3 408 544 B1**
(45) Veröffentlichungstag und Bekanntmachung des Hinweises auf die Patenterteilung: **02.10.2019**
(21) Anmeldenummer: 17701131.9
(22) Anmeldetag: 24.01.2017
(51) Int. Cl.: F16B 13/06

(54) **SPREIZANKER MIT AUFGEKLIPSTEM SPREIZTEIL**
EXPANSION ANCHOR COMPRISING CLIP-ON SPREADING MEMBER
CHEVILLE A EXPANSION COMPRENANT UNE PARTIE D'EXPANSION CLIPSEE

(30) Priorität: 26.01.2016 EP 16152678
(43) Veröffentlichungstag der Anmeldung: 05.12.2018
(73) Patentinhaber: Hilti Aktiengesellschaft, 9494 Schaan (LI)
(72) Erfinder: SHIMAHARA, Hideki, 9470 Buchs (CH); WACHTER, Christian, 6706 Bürs (AT)
(74) Vertreter: Hilti Aktiengesellschaft Corporate Intellectual Property
(86) Internationale Anmeldenummer: PCT/EP2017/051358
(87) Internationale Veröffentlichungsnummer: WO 2017/129534

(56) Entgegenhaltungen:
- EP-A1- 2 848 825

## Beschreibung

Die Erfindung betrifft einen Spreizanker gemäss dem Oberbegriff des Anspruchs 1. Ein solcher Spreizanker ist ausgestattet mit einem Bolzen als erstes Element und zumindest einem am Bolzen angeordneten Spreizteil als zweites Element, wobei am Bolzen ein Spreizbereich zum radialen Versetzen des Spreizteils relativ zum Bolzen sowie eine Lastaufnahmeeinrichtung zum Einleiten von Zugkräften in den Bolzen angeordnet sind, wobei eines der beiden Elemente einen längs des Bolzens verlaufenden ersten Steg und das andere der beiden Elemente eine längs des Bolzens verlaufende erste Nut aufweist, in welche der erste Steg eingreift, und wobei eines der beiden Elemente einen längs des Bolzens verlaufenden zweiten Steg und das andere der beiden Elemente eine längs des Bolzens verlaufende zweite Nut aufweist, in welche der zweite Steg eingreift.

Die EP 2848825 A1 zeigt einen gattungsgemässen Spreizanker, bei dem der Bolzen im Halsbereich eine Vielzahl von Nuten aufweist, welche sich längs des Bolzens erstrecken, und bei dem die Spreizhülse auf ihrer Innenseite eine Vielzahl von Stegen aufweist, welche in die Nuten eingreifen, und durch welche die Wandstärke der Spreizhülse jeweils lokal erhöht ist. Hierdurch kann eine Spreizreserve geschaffen werden, die eine besonders grosse Spreizung erlaubt, ohne den Bolzen im Halsbereich wesentlich schwächen zu müssen.

Ein weiterer Spreizanker, bei dem Strukturen am Bolzen und der Spreizhülse ineinander eingreifen ist aus der EP 2848826 A1 bekannt. Die EP 2871374 A1 beschreibt einen Anker, in dessen Spreizkonus Furchen zur Reibungsminderung vorgesehen sind.

Die US 4482277 A und die US 4334813 A offenbaren verschiedene Spreizanker, deren Spreizhülsen jeweils aus zwei Halbschalen bestehen, die miteinander verrastet sind. Weitere Spreizanker, deren Spreizhülsen jeweils aus zwei Halbschalen besteht, gehen aus der US 4609316 A, der DE 3601598 A1, der US 3766819 A, der FR 2352979 A1 und der EP 0107472 B1 hervor. Die US 3546998 A offenbart einen Anker mit zwei expandierenden Halbschalen, zwischen denen ein Gelenk gebildet ist, und zwischen denen eine Feder wirkt.

Die US 2003017023 A und die GB 1309391 A beschreiben weitere Anker mit mehrteiligen Spreizkörpern, die durch verschiedene Gelenke miteinander verbunden sind.

Die US 3922947 A betrifft einen Anker mit einer Spreizhülse, die eine Nut aufweist, wobei die Nut eine Biegelinie bildet.

Die US 6712572 A beschreibt ein Befestigungselement mit einem eine innenprofilierte Bohrung aufweisenden, zylinderförmigen Spreizkörper, der in zumindest zwei Segmente geteilt ist, wobei benachbarte Segmente durch Verbindungselemente verbunden sind, die Schnappverschlüsse bilden.

Die US 4607992 A beschreibt einen Spreizanker mit einem Spreizkörper, der auf den Bolzen aufgeschraubt ist. Um ein Herausfallen des Spreizkörpers aus der sich gegen das vordere Ende erweiternden Bohrung in der Spreizhülse zu verhindern, ist die Spreizhülse an ihrem vorderen Ende mit einem Vorsprung versehen, an dem zwischen dem Spreizkörper und der Spreizhülse eine Schnappverbindung besteht.

Die CH 254174 A beschreibt einen Spreizanker, dessen Spreizkörper Nocken aufweist, die zur Sicherung gegen Verlieren in Schlitze in der Spreizhülse eingreifen.

Ein Anker, der eine in axialer Richtung wirksame Schnappverbindung aufweist, die den Spreizkörper zwischen den auseinandergespreizten Spreizschenkeln hält, ist aus der DE 19608922 A1 bekannt.

Die EP 1150024 B1 beschreibt einen Spreizanker mit zwei Rasteinrichtungen, welche eine sogenannte Setzhülse in zwei verschiedenen Axialpositionen am Schaft sichern können. Die Setzhülse dient hierbei dazu, zum Spreizen des Spreizelements eine Axialkraft auf das Spreizelement auszuüben.

Die US 3802311 A und die US 3799027 A beschreiben Spreizanker mit keilartigen Spreizteilen, an denen Federarme angeordnet sind. Die Spreizteile können mittels der Federarme so auf den Bolzen aufgeschnappt werden, dass die die Federarme den Bolzen teilweise umgreifen.

Die DE 102011051618 A1 betrifft einen Spreizanker mit einem Verbinder, der den Spreizkörper in einer vorgesehenen Lage mit der Spreizhülse verbindet. Dabei kann eine Schnappverbindung des Spreizkörpers mit dem Verbinder vorgesehen sein, die den Spreizkörper in der vorgesehenen Lage hält.

Die US 2009252571 A beschreibt eine Kunststoff-Dübelhülse, welche aus zwei verrasteten Teilen besteht.

Aufgabe der Erfindung ist es, einen gattungsgemässen Spreizanker so weiterzubilden, dass er bei besonders hoher Leistungsfähigkeit und Zuverlässigkeit besonders einfach zu fertigen ist.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass das Spreizteil mittels einer Schnappverbindung am Bolzen befestigt ist, wobei eine erste Verrastung der Schnappverbindung zwischen dem ersten Steg und der ersten Nut gebildet ist, wobei eine zweite Verrastung der Schnappverbindung zwischen dem zweiten Steg und der zweiten Nut gebildet ist, und wobei die erste Verrastung und die zweite Verrastung das Spreizteil, insbesondere gemeinsam, radial am Bolzen halten.

Ein Grundgedanke der Erfindung kann darin gesehen werden, das Spreizteil mittels einer Schnappverbindung am Bolzen zu befestigen, wobei die ineinandergreifenden Nut-Steg-Strukturen, die, wie beispielsweise in der EP 2848825 A1 beschrieben, gegebenenfalls auch zur Leistungssteigerung des Ankers verwendet werden können, hier Bestandteile der Schnappverbindung sind und Verrastungen bilden, welche das Spreizteil formschlüssig am Bolzen sichern. Zwischen dem ersten Steg und der ersten Nut ist also, insbesondere an den jeweiligen Flanken, eine erste Formschlussverbindung und zwischen dem zweiten Steg und der zweiten Nut, insbesondere an den jeweiligen Flanken, eine zweite Formschlussverbindung gebildet, wobei die beiden Formschlussverbindungen zusammen das Spreizteil radial am Bolzen sichern. Unter einer Schnappverbindung kann in fachüblicher Weise vorzugsweise eine Anordnung zum formschlüssigen Fügen von Bauteilen verstanden werden, wobei sich beim Fügen ein Fügeteil elastisch verformt und sich anschliessend mit dem zweiten Fügeteil verhakt. Die Verhakung wird dabei erfindungsgemäss zwischen den beiden Nuten und den beiden Stegen gebildet, wobei das beim Fügen elastisch verformte Teil vorzugsweise das Spreizteil ist. Das Spreizteil ist also auf den Bolzen aufgeklipst. Dass das Spreizteil mittels einer erfindungsgemässen Schnappverbindung am Bolzen befestigt ist kann vorzugsweise dadurch nachgewiesen werden, dass die formschlüssige Befestigung des Spreizteils am Bolzen durch rein elastisches Biegen, d.h. durch Verformung unterhalb der Fliessgrenze, zumindest eines der beiden Elemente, insbesondere durch rein elastisches Aufbiegen des Spreizteils, wieder aufgehoben werden kann.

Beispielsweise können die Nuten und die Stege parallel zur Längsachse des Bolzens verlaufen. Die Nuten und die Stege können die Längsachse aber auch wendelförmig umlaufen, das heisst die Nuten beziehungsweise die Stege können auch eine Richtungskomponente in Umfangsrichtung aufweisen. Vorzugsweise ist die Ausdehnung der Nuten oder/und der Stege in Axialrichtung grösser als in Umfangsrichtung. Soweit von "radial", "axial" und "Umfangsrichtung" die Rede ist, kann sich dies insbesondere auf die Längsachse des Bolzens beziehen, die vorzugsweise die Symmetrie- und/oder Mittelachse des Bolzens sein kann.

Der Spreizbereich ist vorzugsweise im Bereich des vorderen Endes des Bolzens und/oder die Lastaufnahmeeinrichtung im Bereich des dem vorderen Ende abgewandten rückwärtigen Endes des Bolzens angeordnet. Durch die Schnappverbindung ist das Spreizteil in radialer Richtung am Bolzen gehalten. Vorzugsweise erlaubt die Schnappverbindung aber eine Verschiebung des Spreizteils längs des Bolzens, um eine Relativbewegung des Bolzens mit dem Spreizbereich relativ zum Spreizteil und somit einen konstruktiv besonders einfachen Spreizmechanismus zu ermöglichen. Der Spreizteil und/oder der Bolzen bestehen geeigneterweise aus einem Metallmaterial, welches auch beschichtet sein kann. Die Lastaufnahmeeinrichtung kann insbesondere als Aussengewinde, aber beispielsweise auch als Innengewinde ausgebildet sein. Sie dient zur Einleitung von Zugkräften, die in Auszugsrichtung gerichtet sind, in den Bolzen.

Erfindungsgemäss kann zwischen dem Spreizbereich und dem Spreizteil ein Keilgetriebe gebildet sein, das eine axiale Relativbewegung zwischen dem Spreizbereich und dem Spreizteil in eine radiale Relativbewegung zwischen dem Spreizbereich und dem Spreizteil umwandelt. Vorzugsweise kann somit das Spreizteil vom Spreizbereich radial nach aussen gedrängt und dabei gegen die Bohrlochwand im Substrat gepresst werden, wenn der Spreizbereich, insbesondere zusammen mit dem Bolzen, in Auszugsrichtung relativ zum Spreizteil axial versetzt wird. Hierdurch wiederum kann der Spreizanker im Bohrloch verankert werden. Der Spreizbereich kann also zum radialen Anpressen des Spreizteils an eine Wand eines Bohrlochs dienen.

Vorzugsweise verläuft die Auszugsrichtung parallel zur Längsachse des Bolzens und/oder zeigt aus dem Bohrloch heraus. Am Spreizbereich kann der Abstand der Bolzenoberfläche von der Längsachse des Bolzens entgegen der Auszugsrichtung, das heisst mit zunehmendem Abstand von der Lastaufnahmeeinrichtung, zunehmen.

Das Spreizteil kann Spreizschlitze aufweisen, die von der vorderen Stirnseite des Spreizteils ausgehen. Diese Spreizschlitze können das radiale Spreizen des Spreizteils durch den Spreizbereich erleichtern.

Der Spreizanker kann bevorzugt ein kraftkontrolliert spreizender Spreizanker sein, insbesondere ein sogenannter Bolzenanker. Bei einem Bolzenanker kann der Spreizbereich axial fest am Bolzen angeordnet sein. In diesem Fall wird der Spreizbereich beim Setzen des Spreizankers durch eine gemeinsame axiale Bewegung des Bolzens und des Spreizbereichs relativ zum Spreizteil an das Spreizteil angepresst. Der Spreizbereich ist dabei vorzugsweise einstückig mit dem Bolzen ausgebildet. Alternativ kann bei einem sogenannten Hülsenanker der Spreizbereich an einem vom Bolzen separaten Teil angeordnet sein, welches vorzugsweise über korrespondierende Gewinde mit dem Bolzen verbunden ist. Das Anpressen des Spreizbereichs an das Spreizteil kann dann vorzugsweise zumindest teilweise durch Rotation des Bolzens relativ zum Spreizbereich bewirkt werden, welche von einem Spindeltrieb, der von den korrespondierenden Gewinden gebildet wird, in eine Axialbewegung des Spreizbereichs relativ zum Bolzen umgesetzt wird.

Besonders bevorzugt ist es, dass ein elastisches Element der Schnappverbindung durch das Spreizteil gebildet ist. Demgemäss wird das Spreizteil beim Fügen von Spreizteil und Hülse leicht aufgebogen und anschliessend wieder zumindest teilweise entspannt. Hierdurch kann in besonders einfacher Weise und ohne Beeinträchtigung der Leistungsfähigkeit des Ankers eine besonders zuverlässige Schnappverbindung erhalten werden.

Eine weitere bevorzugte Ausgestaltung besteht darin, dass der erste Steg und der zweite Steg am Spreizteil angeordnet sind und dass die erste Nut und die zweite Nut am Bolzen angeordnet sind. Demgemäss werden also die Verrastungen der Schnappverbindung durch zwei am Spreizteil angeordnete Stege und zwei am Bolzen angeordnete Nuten gebildet, was im Hinblick auf die Leistungsfähigkeit des Ankers, den Herstellungsaufwand und die Zuverlässigkeit der Schnappverbindung vorteilhaft sein kann.

Erfindungsgemäss können auch weitere Nut/Steg-Kombinationen zwischen Spreizteil und Bolzen vorgesehen sein, die auch formschlüssig zur Schnappverbindung beitragen können, dies aber nicht müssen. Insbesondere kann zweckmässigerweise vorgesehen sein, dass am Spreizteil zwischen, insbesondere in Umfangsrichtung zwischen, dem ersten Steg und dem zweiten Steg ein dritter Steg angeordnet ist, und dass am Bolzen zwischen, insbesondere in Umfangsrichtung zwischen, der ersten Nut und der zweiten Nut eine dritte Nut angeordnet ist, in welche der dritte Steg eingreift. Dies kann unter anderem im Hinblick auf die Leistungsfähigkeit des Ankers vorteilhaft sein. Die dritte Nut und der dritte Steg können formschlüssig zur Schnappverbindung beitragen, müssen dies aber nicht.

Besonders vorteilhaft ist es, dass das Spreizteil ein Hülsensegment ist, was eine besonders zuverlässige Schnappverbindung und eine besonders symmetrische Krafteinleitung ermöglicht. Vorzugsweise umspannt das Spreizteil einen an der Längsachse des Bolzens gemessenen Winkel von mehr als 90°, insbesondere von etwa 180°. Insbesondere kann die an der Längsachse des Bolzens gemessene Winkeldistanz zwischen der ersten Nut und der zweiten Nut grösser als 45°, insbesondere grösser als 60° sein. Hierdurch kann in besonders einfacher Weise eine besonders robuste Schnappverbindung realisiert werden. Der Spreizbereich ist geeigneterweise an einem Spreizkonus angeordnet.

Eine weitere vorteilhafte Ausgestaltung der Erfindung liegt darin, dass der Spreizanker zumindest ein weiteres Spreizteil aufweist, das mittels einer Schnappverbindung am Bolzen befestigt ist. Die Schnappverbindung des ersten Spreizteils und die Schnappverbindung des weiteren Spreizteils sind vorzugsweise analog und symmetrisch ausgebildet. Insbesondere können die Spreizteile zusammen eine Spreizhülse bilden und/oder sich zu einer Spreizhülse ergänzen, also den Bolzen vorzugsweise zumindest nahezu vollständig umgeben. Vorzugsweise können die Spreizteile also zumindest bereichsweise auf derselben axialen Höhe längs des Bolzens angeordnet sein und/oder der Spreizbereich kann zum radialen Versetzen auch des zumindest einen weiteren Spreizteils relativ zum Bolzen vorgesehen sein. Besonders bevorzugt ist es, dass insgesamt zwei oder drei, aber auch vier Spreizteile vorgesehen sind, die zusammen die Spreizhülse bilden. Bei einer höheren Zahl von Spreizteilen, die zusammen die Spreizhülse bilden, kann die Wirkung der Schnappverbindung wegen der vergleichsweise geringen Winkelausdehnung der einzelnen Spreizteile um den Bolzen herum unter Umständen abnehmen.

Die Erfindung betrifft auch ein Verfahren zum Herstellen eines erfindungsgemässen Spreizankers, bei dem der Bolzen und das Spreizteil als separate Bauteile bereitgestellt werden, und das Spreizteil anschliessend radial an den Bolzen angedrückt wird und dabei das Spreizteil mit dem Bolzen mittels der Schnappverbindung verbunden, insbesondere verrastet wird. Demgemäss wird die Schnappverbindung bei der Herstellung bestimmungsgemäss betätigt.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine längsgeschnittene Ansicht eines in einem Betonsubstrat gesetzten erfindungsgemässen Spreizankers;
- Figur 2:: eine perspektivische Ansicht des Spreizankers aus Figur 1;
- Figur 3:: eine perspektivische Ansicht des Bolzens des Ankers aus Figur 1 im Bereich des vorderen Endes des Bolzens;
- Figur 4:: eine perspektivische Ansicht der Spreizteile des Ankers aus Figur 1;
- Figur 5:: eine um 90° gedrehte Querschnittsansicht durch den Anker aus Figur 1 im Bereich der Spreizteile, insbesondere gemäss Ansicht A-A in Figur 1; und
- Figur 6:: eine Ansicht gemäss Figur 5 beim Zusammenfügen des Ankers.

Die Figuren zeigen ein Ausführungsbeispiel eines erfindungsgemässen Spreizankers. Der Spreizanker weist einen Bolzen 10 und zwei Spreizteile 21 und 22 auf, wobei die Spreizteile 21 und 22 jeweils hülsensegmentartig ausgebildet sind und zusammen eine Spreizhülse bilden, die den Bolzen 10 ringförmig umgibt. Der Bolzen 10 weist einen Halsbereich 11 mit im wesentlichen konstanten Querschnitt und im Anschluss an den Halsbereich 11 im Bereich des vorderen Endes 51 des Bolzens 10 einen Spreizbereich 12 für die Spreizteile 21 und 22 auf, in welchem sich der Bolzen 10 ausgehend vom Halsbereich 11 zu seinem vorderen Ende 51 hin aufweitet. Auf der dem Spreizbereich 12 abgewandten Seite des Halsbereichs 11 weist der Bolzen 10 einen beispielsweise als Ringschulter ausgebildeten Anschlag 17 für die Spreizteile 21 und 22 auf. Im Bereich seines dem Spreizbereich 12 entgegengesetzten, rückwärtigen Endes 52 ist der Bolzen 10 mit einer als Aussengewinde ausgebildeten Lastaufnahmeeinrichtung 18 versehen.

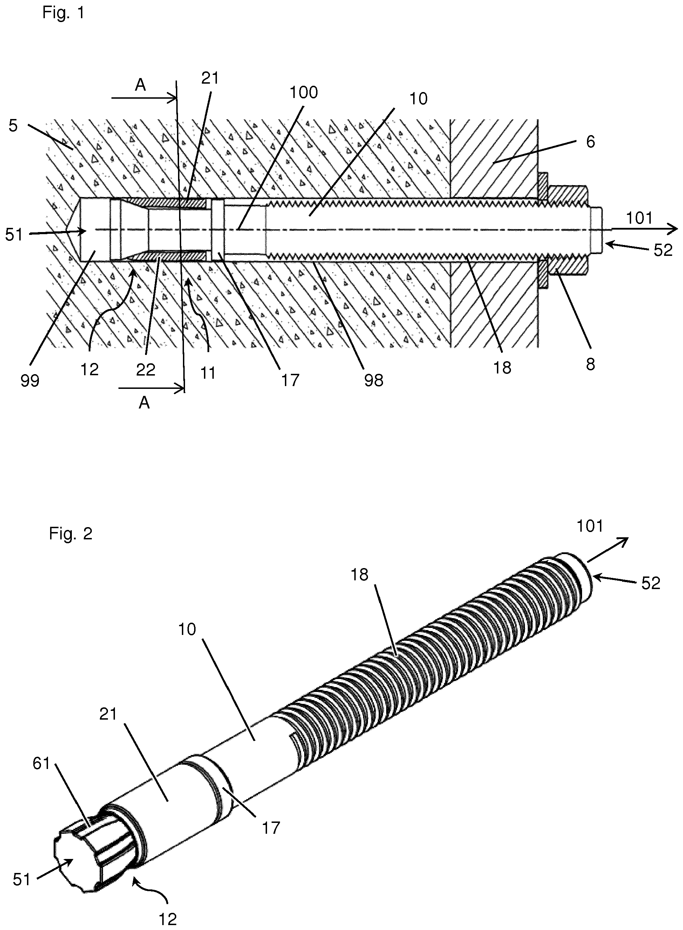

Beim Setzen des Spreizankers wird der Bolzen 10 mit seinem vorderen Ende 51 und dem Spreizbereich 12 voran in Richtung der Längsachse 100 des Bolzens 10 in ein Bohrloch 99 im Substrat 5 aus Figur 1 geschoben. Aufgrund des Anschlags 17 werden dabei auch die Spreizteile 21 und 22 in das Loch eingebracht. Sodann wird der Bolzen 10, beispielsweise durch Anziehen einer auf der als Aussengewinde ausgebildeten Lastaufnahmeeinrichtung 18 angeordneten Mutter 8, wieder ein Stück weit in Auszugsrichtung 101 aus dem Bohrloch 99 herausgezogen. Aufgrund ihrer Reibung mit der Wand 98 des Bohrlochs 99 bleiben die Spreizteile 21 und 22 dabei zurück und es kommt infolgedessen zu einer Verschiebung des Bolzens 10 relativ zu den Spreizteilen 21 und 22, im Rahmen derer der sich aufweitende Spreizbereich 12 des Bolzens 10 radial gegen die Spreizteile 21 und 22 wirkt und diese gegen die Wand 98 des Bohrlochs 99 presst. Durch diesen Mechanismus wird der Spreizanker im Substrat 5 fixiert. Der gesetzte Zustand des Spreizankers, in dem er im Substrat 5 fixiert ist, ist in Figur 1 gezeigt. Mittels der Mutter 8 kann ein Anbauteil 6 am Substrat 5 festgelegt werden.

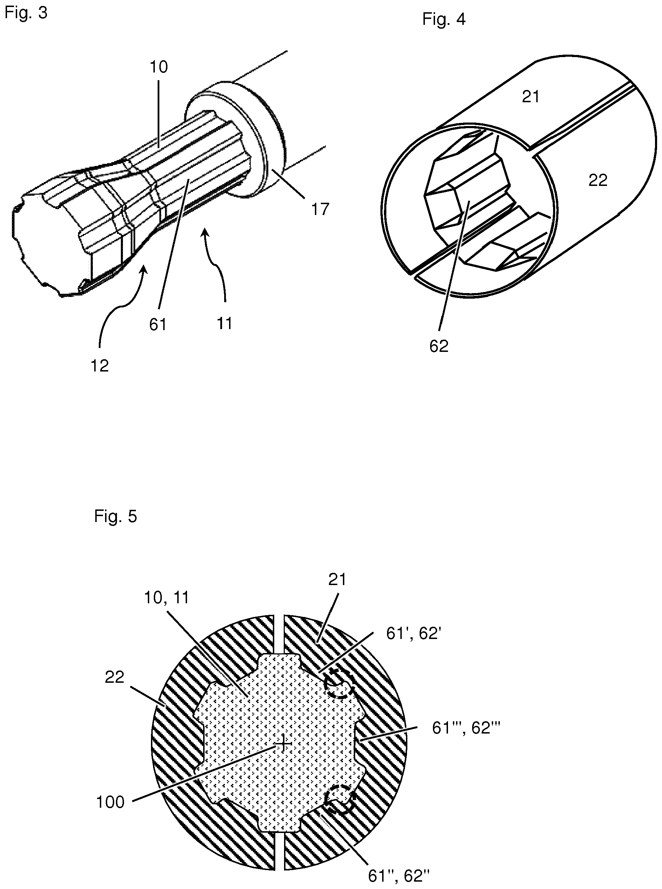

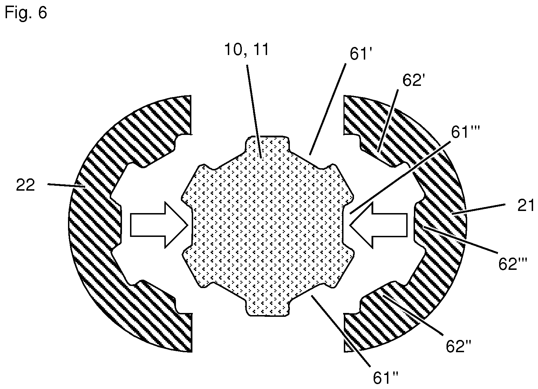

Wie insbesondere die Figuren 2, 3, 5 und 6 zeigen weist der Bolzen 10 in seinem Halsbereich 11 eine Vielzahl von Nuten 61 auf, im dargestellten Ausführungsbeispiel sechs Nuten 61. Diese Nuten 61 erstrecken sich parallel zueinander und parallel zur Längsachse 100 des Bolzens 10, vorzugsweise ausgehend vom Anschlag 17 bis in den Spreizbereich 12. Im Querschnitt der Figuren 5 und 6 weist der Bolzen 10 im Halsbereich 11 eine unrunde Form, vorzugsweise eine Wellenform auf, wobei die Wellentäler durch die Nuten 61 gebildet werden. Die Flanken der Nuten 61 bilden vorzugsweise im Querschnitt jeweils eine Schulter.

Im Spreizbereich 12 des Bolzens 10 nimmt der Umkreis des Bolzens 10 um die Längsachse 100 mit zunehmendem Abstand vom Halsbereich 11 zu (siehe Figuren 1 bis 3). Wie in den Figuren dargestellt können die Nuten 61 vom Halsbereich 11 des Bolzens 10 in den Spreizbereich 12 des Bolzens 10 reichen. In diesem Fall weist auch der Spreizbereich 12 des Bolzens 10 im Querschnitt eine unrunde Form, vorzugsweise eine Wellenform auf.

Wie insbesondere die Figuren 4, 5 und 6 zeigen weisen die Spreizteile 21 und 22 auf ihrer Innenseite eine Vielzahl von Stegen 62 auf, im dargestellten Ausführungsbeispiel sechs Stege 62. Die Zahl der Stege 62 auf der Innenseite der Spreizteile 21 und 22 entspricht vorzugsweise der Zahl der Nuten 61 im Halsbereich 11 des Bolzens 10 oder ist kleiner als die Zahl der Nuten 61. Die Stege 62 erstrecken sich parallel zueinander und parallel zur Längsachse 100 des Bolzens. Im Querschnitt (Figuren 5 und 6) weisen die Spreizteile 21 und 22 vorzugsweise eine innenseitige Wellenform auf, wobei die Wellenberge durch die Stege 62 gebildet werden. Die Flanken der Stege 62 bilden vorzugsweise im Querschnitt jeweils eine Schulter. An den Stegen 62 weisen die Spreizteile 21 und 22 eine grössere Wandstärke auf als in Umfangsrichtung versetzt zu den Stegen 62, wie beispielsweise in den Figuren 5 und 6 erkennbar ist. Wie insbesondere die Querschnittsansicht der Figur 5 zeigt, greifen die Stege 62 der Spreizteile 21 und 22 in die Nuten 61 im Halsbereich 11 des Bolzens 10 ein.

In Figur 6 ist das Herstellungsverfahren des zuvor beschriebenen Spreizdübels skizziert. Wie Figur 6 zeigt, werden bei der Herstellung zunächst der Bolzen 10 und die beiden Spreizteile 21 und 22 als drei getrennte Teile bereitgestellt. Sodann werden die beiden Spreizteile 21 und 22 radial an den Bolzen 10 herangeführt. Dabei tritt ein am Spreizteil 21 angeordneter erster Steg 62' in eine am Bolzen 10 angeordnete erste Nut 61' und ein am Spreizteil 21 angeordneter zweiter Steg 62" in eine am Bolzen 10 angeordnete zweite Nut 61" ein. Beim Eintreten biegt sich das Spreizteil 21 leicht auf und entspannt sich sodann wieder zumindest teilweise, wobei beim Entspannen Formschlussverbindungen zwischen der ersten Nut 61' und dem ersten Steg 62' und zwischen der zweiten Nut 61" und dem zweiten Steg 62" entstehen, nämlich an den in Figur 5 mit Strichlinien eingekreisten Flanken. Diese Formschlussverbindungen sichern das Spreizteil 21 fortan gegen ein Abheben in radialer Richtung vom Bolzen 10, das heisst das Spreizteil 21 ist mittels einer Schnappverbindung am Bolzen 10 befestigt.

In Umfangsrichtung zwischen der ersten Nut 61' und der zweiten Nut 61" weist der Bolzen 10 noch eine dritte Nut 61'" auf, in welche ein am Spreizteil 21 angeordneter dritter Steg 62'" in Eingriff kommt. Diese dritte Nut/Steg-Kombination kann insbesondere im Hinblick auf die Leistungsfähigkeit des Dübels vorgesehen sein. Sie kann auch zur radialen Formschlussverbindung beitragen, muss dies aber nicht.

Das zweite Spreizteil 22 wird durch eine Schnappverbindung am Bolzen 10 befestigt, die analog und symmetrisch zur Schnappverbindung des ersten Spreizteils 21 ausgeführt ist, und die insbesondere ebenfalls auf Formschlussverbindungen basiert, die zwischen zumindest zwei Nuten und zumindest zwei Stegen gebildet sind.

## Patentansprüche

1. Spreizanker mit
- einem Bolzen (10) als erstes Element und
- zumindest einem am Bolzen (10) angeordneten Spreizteil (21) als zweites Element,
- wobei am Bolzen (10) ein Spreizbereich (12) zum radialen Versetzen des Spreizteils (21) relativ zum Bolzen (10) sowie eine Lastaufnahmeeinrichtung (18) zum Einleiten von Zugkräften in den Bolzen (10) angeordnet sind,
- wobei eines der beiden Elemente einen längs des Bolzens (10) verlaufenden ersten Steg (62') und das andere der beiden Elemente eine längs des Bolzens (10) verlaufende erste Nut (61') aufweist, in welche der erste Steg (62') eingreift, und
- wobei eines der beiden Elemente einen längs des Bolzens (10) verlaufenden zweiten Steg (62") und das andere der beiden Elemente eine längs des Bolzens (10) verlaufende zweite Nut (61") aufweist, in welche der zweite Steg (62") eingreift,
**dadurch gekennzeichnet,**
- **dass** das Spreizteil (21) mittels einer Schnappverbindung am Bolzen (10) befestigt ist,
- wobei eine erste Verrastung der Schnappverbindung zwischen dem ersten Steg (62') und der ersten Nut (61') gebildet ist,
- wobei eine zweite Verrastung der Schnappverbindung zwischen dem zweiten Steg (62") und der zweiten Nut (61") gebildet ist, und
- wobei die erste Verrastung und die zweite Verrastung das Spreizteil (21) radial am Bolzen (10) halten.

2. Spreizanker nach Anspruch 1,
**dadurch gekennzeichnet,**
**dass** ein elastisches Element der Schnappverbindung durch das Spreizteil (21) gebildet ist.

3. Spreizanker nach einem der Ansprüche 1 oder 2,
**dadurch gekennzeichnet,**
**dass** der erste Steg (62') und der zweite Steg (62") am Spreizteil (21) angeordnet sind und dass die erste Nut (61') und die zweite Nut (61") am Bolzen (10) angeordnet sind.

4. Spreizanker nach Anspruch 3,
**dadurch gekennzeichnet,**
**dass** am Spreizteil (21) zwischen dem ersten Steg (62') und dem zweiten Steg (62") ein dritter Steg (62"') angeordnet ist, und
**dass** am Bolzen (10) zwischen der ersten Nut (61') und der zweiten Nut (61") eine dritte Nut (61"') angeordnet ist, in welche der dritte Steg (62"') eingreift.

5. Spreizanker nach einem der vorstehenden Ansprüche,
**dadurch gekennzeichnet,**
**dass** das Spreizteil (21) ein Hülsensegment ist und/oder
**dass** der Spreizbereich (12) an einem Spreizkonus angeordnet ist.

6. Spreizanker nach einem der vorstehenden Ansprüche,
**dadurch gekennzeichnet,**
**dass** er zumindest ein weiteres Spreizteil (22) aufweist, das mittels einer Schnappverbindung am Bolzen (10) befestigt ist.

7. Verfahren zum Herstellen eines Spreizankers nach einem der vorstehenden Ansprüche, bei dem
der Bolzen (10) und das Spreizteil (21) als separate Bauteile bereitgestellt werden, und das Spreizteil (21) anschliessend radial an den Bolzen (10) angedrückt wird und dabei das Spreizteil (21) mit dem Bolzen (10) mittels der Schnappverbindung verbunden wird.

## Claims

1. Expansion anchor with
- a bolt (10) as first element and
- at least one expansion part (21) arranged on the bolt (10) as second element,
- in which an expansion area (12) for offsetting the expansion part (21) radially in relation to the bolt (10) as well as a load bearing device (18) for introducing tensile forces into the bolt (10) are arranged on the bolt (10),
- in which one of the two elements has a first stud (62') running along the bolt (10) and the other of the two elements has a first groove (61') running along the bolt (10), in which the first stud (62') engages, and
- in which one of the two elements has a second stud (62") running along the bolt (10) and the other of the two elements has a second groove (61") running along the bolt (10), in which the second stud (62") engages,
**characterised in that**
- the expansion part (21) is fastened to the bolt (10) by means of a snap connection,
- in which a first catch of the snap connection is formed between the first stud (62') and the first groove (61'),
- in which a second catch of the snap connection is formed between the second stud (62") and the second groove (61") and
- in which the first catch and the second catch hold the expansion part (21) radially on the bolt (10).

2. Expansion anchor according to claim 1,
**characterised in that**
an elastic element of the snap connection is formed by the expansion part (21).

3. Expansion anchor according to one of claims 1 or
2, **characterised in that**
the first stud (62') and the second stud (62") are arranged on the expansion part (21) and the first groove (61') and the second groove (61") are arranged on the bolt (10).

4. Expansion anchor according to claim 3,
**characterised in that**
a third stud (62"') is arranged on the expansion part (21) between the first stud (62') and the second stud (62") and
a third groove (61"') is arranged on the bolt (10) between the first groove (61') and the second groove (61"), in which the third stud (62'") engages.

5. Expansion anchor according to one of the previous
claims, **characterised in that**
the expansion part (21) is a sleeve segment and/or
the expansion area (12) is arranged on an expansion cone.

6. Expansion anchor according to one of the previous
claims, **characterised in that**
it has at least a further expansion part (22), which is fastened to the bolt (10) by means of a snap connection.

7. Method for producing an expansion anchor according to one of the previous claims, in which
the bolt (10) and the expansion part (21) are provided as separate components and the expansion part (21) is then pressed onto the bolt (10) radially and in this the expansion part (21) is connected to the bolt (10) by means of the snap connection.

## Revendications

1. Ancrage expansible comportant :
- un boulon (10) en tant que premier élément et
- au moins une partie d'expansion (21) agencée sur le boulon (10) en tant que second élément,
- dans lequel une zone d'expansion (12) est agencée sur le boulon (10) pour le déplacement radial de la partie d'expansion (21) par rapport au boulon (10), ainsi qu'un dispositif porteur de charge (18) pour transmettre des forces de traction dans le boulon (10),
- dans lequel l'un des deux éléments comporte une première nervure (62') s'étendant le long du boulon (10) et l'autre des deux éléments comporte une première rainure (61') s'étendant le long du boulon (10), la première nervure (62') s'engageant dans la première rainure (61'), et
- dans lequel l'un des deux éléments comporte une deuxième nervure (62") s'étendant le long du boulon (10) et l'autre des deux éléments comporte une deuxième rainure (61") s'étendant le long du boulon (10), la deuxième nervure (62") s'engageant dans la deuxième rainure (61"),
**caractérisé en ce que**
- la partie d'expansion (21) est fixée sur le boulon (10) au moyen d'une liaison à encliquetage,
- dans lequel un premier encliquetage de la liaison à encliquetage est formé entre la première nervure (62') et la première rainure (61'),
- dans lequel un second encliquetage de la liaison à encliquetage est formé entre la deuxième nervure (62") et la deuxième rainure (61"), et
- dans lequel le premier encliquetage et le second encliquetage maintiennent la partie d'expansion (21) radialement sur le boulon (10).

2. Ancrage expansible selon la revendication 1,
**caractérisé en ce que**
un élément élastique de la liaison à encliquetage est formé par la partie d'expansion (21).

3. Ancrage expansible selon l'une des revendications 1 ou 2,
**caractérisé en ce que**
la première nervure (62') et la deuxième nervure (62") sont agencées sur la partie d'expansion (21) et
la première rainure (61') et la deuxième rainure (61") sont agencées sur le boulon (10).

4. Ancrage expansible selon la revendication 3,
**caractérisé en ce que**
une troisième nervure (62"') est agencée sur la partie d'expansion (21) entre la première nervure (62') et la deuxième nervure (62"), et
une troisième rainure (61"') est agencée sur le boulon (10) entre la première rainure (61') et la deuxième rainure (61"), la troisième nervure (62"') s'engageant dans la troisième rainure (61"').

5. Ancrage expansible selon l'une des revendications précédentes,
**caractérisé en ce que**
la partie d'expansion (21) est un segment de douille et/ou
la zone d'expansion (12) est agencée sur un cône d'expansion.

6. Ancrage expansible selon l'une des revendications précédentes,
**caractérisé en ce que**
il comporte au moins une partie d'expansion supplémentaire (22) qui est fixée sur le boulon (10) au moyen d'une liaison à encliquetage.

7. Procédé pour fabriquer un ancrage expansible selon l'une des revendications précédentes, dans lequel le boulon (10) et la partie d'expansion (21) sont fournis sous forme d'éléments séparés, et la partie d'expansion (21) est ensuite pressée radialement sur le boulon (10) et la partie d'expansion (21) est ainsi assemblée au boulon (10) au moyen de la liaison à encliquetage.
